# EUROPÄISCHE PATENTSCHRIFT

(11) **EP 0 732 043 B1**
(45) Veröffentlichungstag und Bekanntmachung des Hinweises auf die Patenterteilung: **01.12.1999**
(21) Anmeldenummer: 96101458.6
(22) Anmeldetag: 02.02.1996
(51) Int. Cl.: A01B 69/00

(54) **Selbstlenkvorrichtung**
Selfsteering device
Dispositif d'autoguidage

(30) Priorität: 13.03.1995 DE 19508944
(43) Veröffentlichungstag der Anmeldung: 18.09.1996
(73) Patentinhaber: CLAAS KGaA, 33428 Harsewinkel (DE)
(72) Erfinder: Diekhans, Norbert, Dr., D-33335 Gürtersloh (DE); Autermann, Ludger, D-48317 Drensteinfurt (DE); Hagedorn, Stefan, D-48231 Warendorf (DE); Huster, Jochen, D-33428 Harsewinkel (DE)

(56) Entgegenhaltungen:
- EP-A- 0 449 754
- EP-A- 0 658 467
- FR-A- 2 500 988
- PATENT ABSTRACTS OF JAPAN vol. 10, no. 160 & JP-A-61 013311 (NIHON YUSOUKI), 21.Januar 1986,

## Beschreibung

Die Erfindung betrifft eine Selbstlenkvorrichtung, insbesondere für eine Landmaschine, mit mindestens einer Ortungsvorrichtung, insbesondere einer Erntegutkanten- oder Reihenortungsvorrichtung, deren Ortungssignal(e) einer Regelvorrichtung zugeführt ist, die mindestens ein Lenkhydraulikstellsignal an eine elektrisch gesteuerte Lenkhydraulik von lenkbaren Rädern der Landmaschine derart abgibt, daß eine jeweilige Ortungssignalabweichung von einem vorgegebenen Ortungskriterium, insbes. einer Getreidekanten-Seitenlage, minimiert wird.

Eine derartige Vorrichtung ist aus der DE-A- 21 09 744 bekannt. Bei dieser Vorrichtung werden Ortungssignale unmittelbar auf Steuermittel für die Lenkhydraulik gegeben, so daß nur in sehr grober Weise eine Einhaltung eines vorgegebenen Lenkkriteriums möglich ist.

Es ist Aufgabe der Erfindung eine erhöhte Genauigkeit der Lenkung zu erreichen, auch wenn erhebliche die Lenkung beeinflußende Betriebsänderungen auf das Fahrzeug einwirken.

Die Lösung der Aufgabe besteht aus der in Anspruch 1 definierten Selbstlenkvorrichtung.

Vorteilhafte Ausgestaltungen sind in den Unteransprüchen angegeben.

Durch das Hinzunehmen weitere Eingangssignale in die Regelvorrichtung wird die Regelcharakteristik vorteilhaft beeinflußt. Weiterhin ist es vorgesehen, solche Eingangssignale der Regelvorrichtung zuzuführen, welche für die Sicherheit bedeutsam sind, so daß die elektronische Regelvorrichtung dann außer Funktion gesetzt wird, wenn diese entweder durch entsprechende Bedienschalter oder auf Grund einer Fehlermeldung abzuschalten ist. In diesem Sicherheitslenkzustand erfolgt eine unmittelbare Steuerung der Hydraulik vom Lenkrad aus.

Zur Vereinfachung der Anpassung an unterschiedliche Lenkbedingungen, dies kann eine Umrüstung des Fahrzeuges betreffen oder dessen Einsatz in unterschiedlichen Umgebungsbedingungen, ist es vorgesehen, daß die Regelvorrichtung über Fuzzyfizierungsregeln und zugehörige Parameter gesteuert wird und die erzeugte Lenksteuergröße über Defuzzyfizierungsregeln und entsprechende Parameter in die Lenkhydraulikstellsignale transformiert wird. Hierdurch ist es relativ einfach, über qualitative Angaben die Steuervorgänge quantitativ in bestimmter Weise vorzugeben.

Die Fuzzyfizierungsregeln und Parametern werden ebenso wie die Defuzzyfizierungsregeln und Parameter über eine Eingabevorrichtung entweder unmittelbar in die Regelvorrichtung eingegeben oder über einen Zentralprozessor, welcher mit der Regelvorrichtung kommuniziert, bereitgestellt. Auch können sie in elektrisch programmierbare Speicher, z.B. EPROM oder EEPROM, eingespeichert werden.

Die verschiedenen Eingangssignale werden vorteilhaft jeweils digitalisiert und in der Regelvorrichtung nach ihrer Nullpunktlage und ihrer Bereichsgröße normiert. Hierzu werden die jeweils äußersten Eingangssignale durch entsprechende Auslenkung erzeugt und dabei ein Lernvorgang der Normierungsgröße über die Eingabevorrichtung erregt. Ebenso wird die Mittellage der verschiedenen Sensoren nach deren Einstellung als Nullpunktlage erzeugt und von der Regelvorrichtung gelernt.

In entsprechender Weise werden auch die Defuzzyfizierungsparameter der Lenkhydraulik entsprechend durch einen Lernprozess erzeugt. Es hat sich hierfür besonders vorteilhaft erwiesen, das Linksstellsignal und das Rechtsstellsignal der Regelvorrichtung im Bereich nahe der zugehörigen Nullpunkte überschneidend zu normieren, wodurch ggf. ein verzögertes Ansprechen der Ventile in seiner Auswirkung weitgehend eliminiert wird und ein weitgehend proportionaler Durchgang der erbrachten Stellfunktion zu Lenksteuergröße erreicht wird.

Im praktische Betrieb hat es sich beim Betrieb von einem Mähdrescher vorteilhaft erwiesen, die Lenksteuergröße auf einen oberen und einen unteren Grenzwert zu normieren, so daß die Lenkhydraulik nicht die größtmöglichen Lenkwinkel automatisch ansteuert.

Weiterhin hat sich vorteilhaft erwiesen, in der Regelvorrichtung eine statistische Auswertung der Lenksteuergröße vorzunehmen und die Genauigkeit der Lenkung auf Grund der statistischen Parameter zu beurteilen und abhängig davon, eine schrittweise Variation der Fuzzifizierungsparametern vorzunehmen, so daß eine Optimierung der Lenkung sukzessiv erreicht wird.

Als geeignet für die Beurteilung der Lenkgüte haben sich als statistische Größe die Amplitudenstreuung, der Amplitudenspitzenwert und auch der Spitzenwert der Regelzeitkonstante erwiesen. Besonders vorteilhaft ist es, eine Relativierung der Eingangssignale in Bezug auf die Fahrgeschwindigkeit vorzunehmen, so daß die Lenkung bezüglich des zurückgelegten Fahrweges erfolgt und die Auslenkungen in dem einzuhaltenden Sollfahrwegbereich bleibt und weitgehend unabhängig von der Geschwindigkeit ist.

Für die Sicherheitsüberwachung der Regelvorrichtung ist es vorgesehen, daß das periodische Signal des funktionalen Betriebes auf eine externe Vorrichtung gegeben wird, die das periodische Signal gleichrichtet und einem Sicherheitsrelais zuführt, dessen Schaltkontakt in Reihe mit weiteren Sicherheitskontakten den Links-Rechtssteuerventilen ihre Stromversorgung zuleitet, so daß diese Ventile, wenn sie stromlos sind, federbelastet in den sicheren, geschlossen Zustand versetzt werden.

Die digitale Steuerung ist in einem handelsüblichen 8-Bit-Mikroprozessor leicht zu verwirklichen. Die Ein- und Ausgabedaten und auch die durch Selbstoptimierung erzeugten Parameter werden zweckmäßig in einem Speichermedium abgelegt oder auch für eine spätere Wiederverwendung unter ähnlichen Betriebsbedingungen ausgegeben.

Die Regelvorrichtung kann mit verschiedenartigen Ortungsvorrichtungen zusammenarbeiten deren Ortungssignale in jeweils angepaßter normierter Form auswerten. So hat es sich für einen Mähdrescher als günstig erwiesen, drei Teilortungsvorrichtungen so anzuordnen, daß eine das Stoppelfeld, eine zweite das Getreidefeld und eine dritte die Getreidekante anvisiert, wobei die Signale der ersten und der zweiten Teilortungsvorrichtung jeweils den Normierungsbereich begrenzen und das dazwischenliegende Signal des dritten Teilortungssensors auf diesen Bereich bezogen, als das Ortungssignal weiter verarbeitet wird. Es lassen sich auf diese Weise sowohl optische, insbesondere infrarote, als auch akkustische Sensorsignale auswerten.

Die Ortungsvorrichtung, welche die Getreidekante abtastet, ist vorteilhaft so eingerichtet, daß sie einen Bereich erfaßt, der mehrere Meter vor dem Schneidwerk der Erntemaschine liegt, da diese andererseits an ihren rückwärtsgelegenen Rädern gelenkt wird und deshalb eine Abweichung vom vorgesehenen Fahrweg nur nach einem größeren zurückgelegten Fahrweg ausgeglichen werden kann.

Bei dieser Anordnung hat es sich als günstig erwiesen, das Ist-Signal des Radstellwinkels als Eingangsgröße in die Regelvorrichtung einzuführen, so daß praktisch vorausschauend aus diesem Signal der spätere Weg der Erntemaschine berücksichtigt wird. Hierzu hat es sich als vorteilhaft erwiesen, ein zweidimensionales Kennlinienfeld zu erstellen, dessen Eingangsgrößen das Ortungssignal und das Radstellwinkelsignal sind und dessen Inhalte jeweils die passende Lenksteuergröße bilden. Dieses Kennlinienfeld wird nach und nach in seinen Eintragungen für eine optimale Lenkung optimierend variiert.

Auch die Signale von bekannten mechanisch-elektrischen Reihenabtastern, die an Maiserntern Verwendung finden, lassen sich als Ortungssignale in der Vorrichtung auswerten.

Anhand der Figuren 1 bis 7 sind vorteilhafte Ausgestaltungen dargestellt.
- Fig. 1: zeigt ein Übersichtsbild eines Mähdreschers mit Fuzzy-Lenkvorrichtung;
- Fig. 2: zeigt einen Bildausschnitt eines Maisernters;
- Fig. 3: zeigt ein Funktionsschaltbild der Fuzzysteuerung;
- Fig. 4: zeigt eine Teilfunktionsdarstellung;
- Fig. 5: zeigt Normierungsfunktionen der Stellsignale;
- Fig. 6: zeigt ein Getreidekantenabtaster mit Bezugsortungsvorrichtungen;
- Fig. 7: zeigt eine Sicherheitsschaltung.

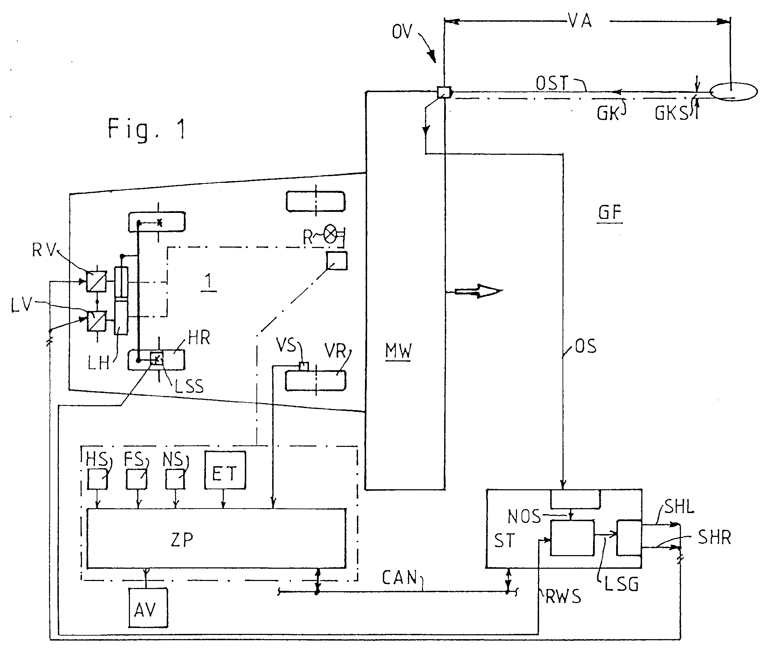

Figur 1 zeigt einen Mähdrescher (1) mit einem Mähwerk (MW), welcher an einer Getreidekante (GK) eines Getreidefeldes (GF) unter Einhaltung einer möglichst geringen Abweichung von einer vorgegebenen Getreidekantenseitenlage (GKS) automatisch gesteuert entlangfahren soll. Oberhalb des Mähwerkes (MW) ist eine Ortungsvorrichtung (OV) angeordnet, deren Ortungsstrahl (OST) auf die Getreidekante (GK) orientiert ist, und deren Ortungssignal (OS) einer Regelvorrichtung (ST) zugeführt ist. Im vorgegebenen Beispiel ist die Regelvorrichtung (ST) über einen genormten Datenbus (CAN) mit einem Zentralprozessor (ZP) verbunden, über den auch die übrigen Steuerprozesse des Mähdreschers überwacht werden. Hierzu sind an dem Zentralprozessor eine Eingabetastatur (ET) und eine Ausgabevorrichtung (AV) vorgesehen. Weiterhin nimmt der Zentralprozessor von den Vorderrändern (VR) ein Geschwindigkeitssignal (VS) auf und von dem Lenkrad (R) Lenkradsignale (LRS). Von der Regelvorrichtung (ST) wird die Lenkhydraulik (LH) mittels eines Linkssteuerventiles (LV) und eines Rechtssteuerventils (RV) angesteuert, deren hydraulischen Ausgänge die vorhandene Lenkhydraulik beaufschlagen, die den Einschlag der Hinterrädern (HR) bewirkt. An der Lenkvorrichtung wird ein Radstellwinkelsignal (RWS) abgenommen und der Regelvorrichtung zugeführt. Die Lenkstellventile (LV, RV) sind federbelastet selbstsicher ausgeführt, so daß sie bei Stromausfall geschlossen sind. In diesem Zustand wird die Lenkung unmittelbar über die bekannte hydraulische Steuerung vom Lenkrad (R) aus vorgenommen. In der Bedienerkabine sind außerdem ein Hand-, ein Fuß- und ein Sicherheitsschalter angeordnet, deren Signale der Lenkstellventilanordnung aus Sicherheitsgründen zugeführt sind und ebenfalls der Regelvorrichtung zugänglich gemacht sind.

Es läßt sich erkennen, daß der Vorausabstand (VA) mit dem der Ortungstrahl (OST) die Getreidekante (GK) abtastet, in etwa dem Abstand der Vorderräder (VR) von den Hinterrädern (HR) entspricht. Auf diese Weise ergibt eine Winkelabweichung der Mähdrescherachse zur Getreidekante, die sich in dem Ortungssignal als Teilkomponente darstellt, ein Äquivalent zu dem Radstellwinkelsignal. Diese Winkelkomponente des Ortungssignales überlagert die Komponente der Seitenabweichung der Richtungsachse des Mähdreschers von dem vorgegebenen Sollweg, d.h. die Komponente, die die Getreidekantenseitenlage (GKS) erbringt.

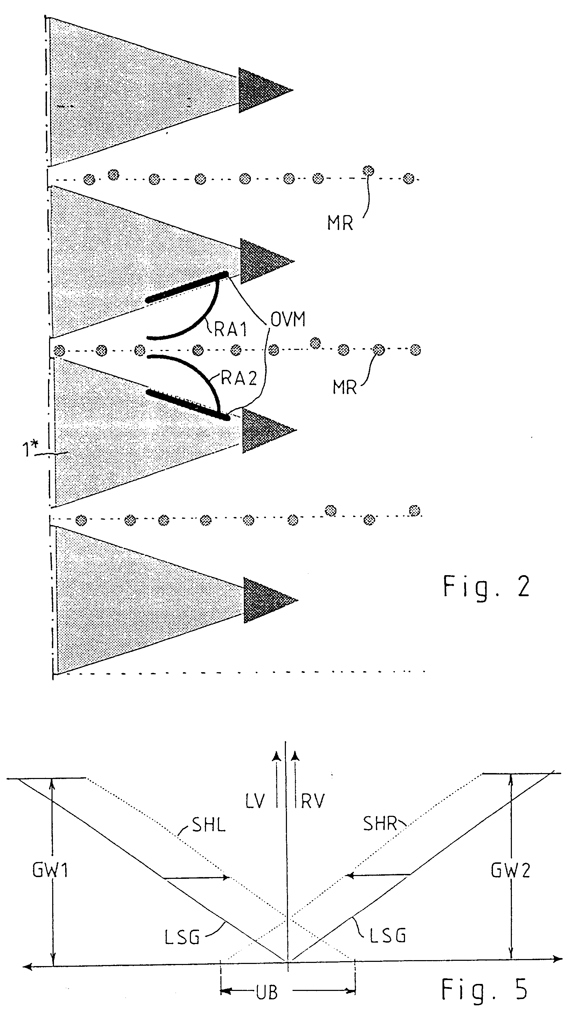

Figur 2 zeigt ein weiteres Beispiel einer Ortungsvorrichtung an dem Erntewerk eines Maisernters (1*). Dort sind in bekannter Weise Fühler (RA1, RA2) an den Schneidwerkträgern so angeordnet, daß deren Enden eine Maisreihe (MR) abtasten und an Sensoren (OVM) jeweils bei unsymmetrischer Auslenkung entsprechende Ortungssignale für eine Rechts- oder Linkskorrektur abgeben.

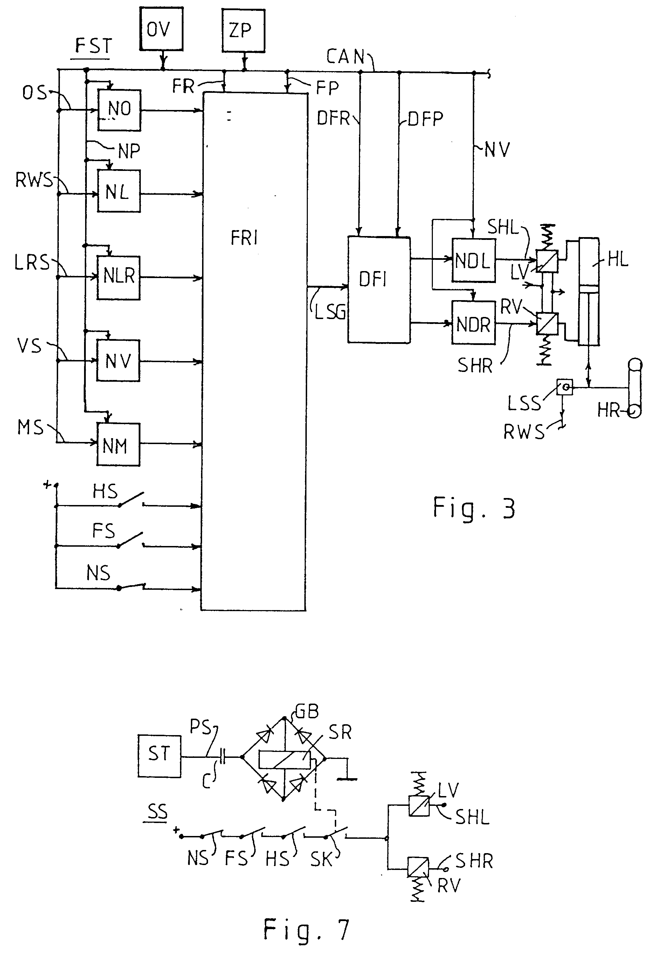

Figur 3 zeigt ein schematisches Schaltbild der Regelvorrichtung, die insbesondere eine Fuzzyregelvorrichtung (FST) ist. Diese besteht aus einem Fuzzyregelinterpreter (FRI), der aus den Eingangssignalen die Lenksteuergröße (LSG) erzeugt, welche in einem Defuzzyfizierungsinterpreter (DFI) in die eigentlichen Lenksteuersignale (SHL, SHR) umgesetzt wird.

Als Eingangsgröße ist ein Ortungssignal (OS) vorgesehen, welches über einen Ortungsignalnormierer (NO) durch Normierungsparameter (NP) umgesetzt, dem Interpreter (FRI) zugeführt wird. Außerdem wird das Radstellwinkelsignal (RWS) über einen zugehörigen Normierer (NL) dem Interpreter (FRI) zugeführt. Die Fuzzyregeln (FR) und zugehörige Fuzzyparameter (FP) werden von der Eingabevorrichtung über den Datenbus (CAN) in den Interpreter eingegeben und dort abgespeichert. Die aus dem Ortungssignal (OS) und dem Radstellwinkelsignal (RWS) erzeugte Lenksteuergröße (LSG) wird mittels der Defuzzyfizierungsregeln (DFR) und zugehöriger Defuzzyfizierungsparameter (DFP) umgewandelt und in Normierern der Lenkungssteuersignale (NDL, NDR) in Links-Rechts-Steuersignale (SHL, SHR) der Lenkhydraulik (LH) umgewandelt. Die Lenkhydraulik (LH) arbeitet auf die Hinterräder (HR) und wird durch ein Linkssteuerventil (LV) und ein Rechtssteuerventil (RV) jeweils mit einem Magneten elektromagnetisch gesteuert betätigt. Die Normierungsvorgaben (NV) und die Defuzzyfizierungsregeln (DFR) und die Defuzzyfizierungsparameter (DFP) werden beispielsweise ebenfalls über den Datenbus (CAN) aus dem Zentralprozessor (ZP) eingespeist und eingespeichert.

In einer weiteren Ausbaustufe werden weitere Eingangssignale nämlich ein Lenkradstellsignal (LRS) über einen zugehörigen Normierer (NLR) weiterhin ein Geschwindigkeitssignal (VS) über einen Normierer (NV) und ein Mittenstellsignal (MS) über einen Normierer (NM) in den Interpeter (FRI) eingegeben. Außerdem werden für die Sicherheitsabfrage Schaltersignale von einem Handschalter (HS) und einem Fußschalter (FS) und einem Notschalter (NS) in den Interpreter (FRI) eingespeist.

Die Normierungsparameter (NP) für die Normierung der Eingangssignale werden ebenfalls zweckmäßig aus dem Datenbus (CAN) übernommen.

Die Ortungsvorrichtung (OV) kann entweder unmittelbar ihr Ortungssignal (OS) in den Normierer (NO) einspeisen oder, wie dargestellt, bereits digitalisiert über den Datenbus (CAN) weiterführen. Die anderen Sensoren welche die Eingangsgrößen erzeugen, liegen im allgemeinen in dem Mähdrescher verteilt und geben ihre Signale über zugehörige Digitalisierer und Rechner weiter. Selbstverständlich können die Normierer jeweils zugehörig unmittelbar dort im Sensorbereich installiert sein.

An den gelenkten Hinterrädern (HR) befindet sich ein Lenkradstellungssensor (LSS), dessen Radwinkelsignal (RWS) in geeigneter Weise als Eingangssignal benutzt wird.

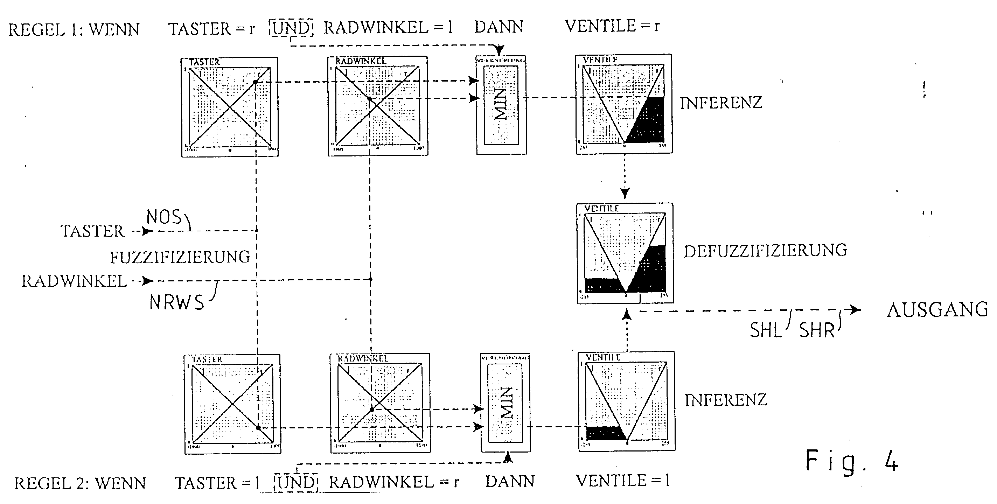

Figur 4 zeigt ein Beispiel der Fuzzyfizierung der normierten Ortungssignale (NOS) und des normierten Radwinkelsignales (NRWS) über jeweils zugeordnete Datenfelder, deren Ausgangsdaten jeweils über eine Fuzzyverknüpfung (MIN) an weitere Datenfelder (INFERENZ) zwecks Defuzzyfizierung geleitet werden, wodurch die Links- und Rechts-Lenkhydraulikstellsignale (SHL, SHR) ausgangsseitig abgegeben werden.

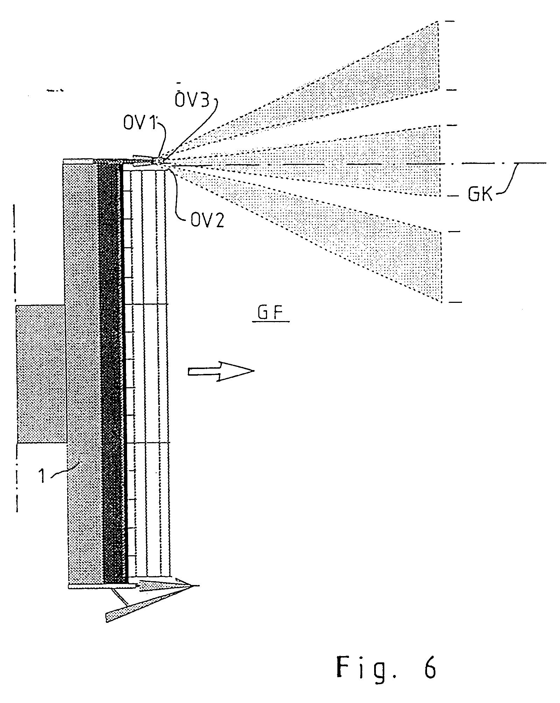

Figur 5 zeigt ein Beispiel der Umsetzung der Lenksteuergröße in den beiden Normierern, die sich als besonders zweckmäßig erwiesen hat. Hierbei werden die beiden Stellsignale der Lenkventile, das Linksstellsignal (SHL) und das Rechtsstellsignal (SHR) um den Nullpunkt herum in einen Überdeckungsbereich (UB) überschneidend ausgegeben, so daß die Ansprechschwelle der hydraulischen Stellventile dabei berücksichtigt ist.

Weiterhin sind die beiden Stellsignale (SHL, SHR) jeweils auf einen Grenzwert (GW1, GW2) beschränkt, so daß keine extremen Lenksteuerausschläge der Räder auftreten können. Die Größe des Überdeckungsbereiches (UB) und der Grenzwerte (GW1, GW2) können im praktischen Betrieb festgelegt und optimiert werden.

Figur 6 zeigt eine Ortungsvorrichtung, die sich insbesondere bei Ultraschall- und Infrarotortung bewährt hat. Hierbei ist an dem Mähdrescher (1) am Schneidwerk nahe der Getreidekante (GK) eine Ortungsvorrichtung mit drei Teilvorrichtungen vorgesehen, von denen die erste Ortungsteilvorrichtung (OV1) das bereits abgeerntete Stoppelfeld erfaßt, die zweite Ortungsteilvorrichtung (OV2) in das Getreidefeld (GF) gerichtet ist und die dritte Ortungsteilvorrichtung (OV3) die Getreidekante (GK) erfaßt. Die drei Teilortungsvorrichtungen lassen sich auch, insbesondere bei optischer Ortung, mittels einer Sensorzeile darstellen, von der jeweils ein Abschnitt über ein geeignetes Fokussiersystem den drei Feldbereichen zugeordnet ist. Die beiden Signale der außenliegenden Ortungsbereiche werden als Referenzsignale für die obere und untere Normierungsgrenze des Signales des in der Mitte gelegenen Ortungsbereichs genutzt, wodurch eine immer gleichbleibende Empfindlichkeit, trotz schwankender Eingangssignaldifferenzen, gesichert ist.

Figur 7 zeigt eine Sicherheitsschaltung (SS). Die Spannungsversorgung der beiden Lenksteuerventile (LV, RV) welche mit den Lenksteuersignalen (SHL, SHR) angesteuert werden, wird über eine UND-Schaltung, d.h. eine Serienschaltung von sicherheitsrelevanten Kontakten geführt. Hierzu ist ein Ruhekontakt eines Notschalters (NS) ein Arbeitskontakt eines Fußschalters (FS), ein Arbeitskontakt eines Handschalters (HS) und ein Arbeitskontakt (SK) eines Sicherheitsrelais (SR) vorgesehen. Letzteres wird über ein periodisches Betriebssignal (PS) von der Regelvorrichtung (ST) angesteuert, indem es über einen Trennkondensator (C) auf eine Gleichrichterbrücke (GB) gegeben wird und somit gleichgerichtet das Sicherheitsrelais (SR) beaufschlagt. Wenn die Regelvorrichtung nicht mehr periodisch arbeitet oder aufgrund der Auswertung von Steuerkriterien eine automatische Lenkung nicht mehr vorgenommen werden soll, wird das Sicherheitsrelais (SR) nicht mehr bestromt und so die Stromversorgung der hydraulischen Lenkventile (LV, RV) abgeschaltet, so daß diese durch Federkraft geschlossen werden. Die Ausgestaltung der Regelvorrichtung (ST), die das periodische Betriebssignal erzeugt und die Schaltschwelle des Sicherheitsrelais (RS) sind so ausgebildet, daß auch bei Ausfall eines Bauteiles incl. des Kondensators (C) oder eines Brückengleichrichters das Relais (RS) abfällt und so die Sicherheitsschaltung die Abschaltung der Automatik bewirkt.

Es hat sich gezeigt, daß bei herkömmlichen Mähdreschern etwa 60% der Aufmerksamkeit des Fahrers für das Lenken der Maschine beansprucht wurde. Die Lenktätigkeit ist deshalb besonders anstrengend, da das Lenken mit den Hinterrändern eine relativ lange Vorhaltezeit benötigt, bis eine seitliche Lageänderung des Mähdreschers zur Getreidekante auftritt, und danach muß durch ein entsprechendes Gegensteuern wieder die Geradeausfahrt herbeiführt werden. Das automatische Lenken ermöglicht bei praktisch völliger diesbezüglicher Entlastung des Fahrers dadurch im allgemeinen ein schnelleres Fahren und eine annähernd vollständige Auslastung der Schneidwerksbreite bis auf einen Sicherheitsrestabstand von 10 bis 20 cm.

Der Aufbau der Regelvorrichtung mittels eines digitalen Rechners ermöglicht die völlige Integration des Lenksystems in die übrige digitale Steuerung des Mähdreschers. Durch einfache Parametrisierung und durch eine Bedienung von der zentralen Bedienungskonsole der Erntemaschine werden die jeweils notwendigen Regeln und Parameter dem Prozessor vorgegeben; die Regelvorrichtung selbst ist in ihrer Grundstruktur völlig neutral. Auch die unterschiedlichsten Ortungssysteme lassen sich durch einfache Parametrisierung und Normierung der Signale anschließen, und es ist keine spezielle hardwaremäßige Auslegung der Regelvorrichtung hierfür erforderlich. Durch die Verwendung der Fuzzylogik lassen sich leicht weitere vorhandene Zusatzinformationen in die Steuerung einbringen, soweit diese für eine weitere Optimierung des Regelvorganges nützlich erscheinen. Durch die automatische Optimierung erhalten diese weiteren Informationen jeweils die ihnen zukommende Relevanz.

## Patentansprüche

1. Selbstlenkvorrichtung mit mindestens einer Ortungsvorrichtung (OV), deren Ortungssignal(e) (OS) einer Regelvorrichtung (ST) zugeführt ist, die mindestens ein Lenkhydraulikstellsignal (SHL, SHR) an eine elektrisch gesteuerte Lenkhydraulik (LH) derart abgibt, daß eine jeweilige Ortungssignalabweichung von einem vorgegebenen Ortungskriterium minimiert wird, **dadurch gekennzeichnet, daß** die Regelvorrichtung (ST) das Ortungssignal (OS) periodisch digitalisiert und über eine digitalfunktionale Verknüpfung der Ortungssignalabweichung von dem Ortungskriterium das Lenkhydraulikstellsignal (SHL, SHR) in einem Bereich nahe Null etwa proportional und von dort jeweils zunehmend progressiv erzeugt und an die Lenkhydraulik (LH) abgibt und der Regelvorrichtung weitere Eingangssignale zugeführt sind und diese Eingangssignale unmittelbar oder gruppenweise zusammengefaßt einem vorzugsweise zweidimensionalen Kenndatenfeld periodisch adressierend zugeführt sind, dessen Kenndaten die Regelvorrichtung unmittelbar oder transformiert als die Lenkhydraulikstellsignale (SHL, SHR) abgibt, und daß
die Regelvorrichtung (ST) das periodische Ortungssignal (OS) mittels Fuzzyfizierungsregeln gemäß Fuzzyfizierungsparametern (FP) in eine Lenksteuergröße (LSG) transformiert und diese nach Defuzzyfizierungsregeln gemäß Defuzzyfizierungsparametern (DFP) in das/die Lenkhydraulikstellsignale (SHL, SHR) transformiert.

2. Selbstlenkvorrichtung nach Anspruch 1 dadurch gekennzeichnet, daß wenn mindestens eines der Schaltersignale (HS, NS, FS) eine AUS-Stellung oder Not-Stellung signalisiert, nur das Lenkradstellungssignal (LRS) und nicht das Ortungssignal (OS) einen Beitrag zur Lenksteuergröße (LSG) erbringt.

3. Selbstlenkvorrichtung nach Anspruch 1 oder 2. dadurch gekennzeichnet, daß die Fuzzyfizierungsregeln und - parameter (FP) und/oder die Defuzzyfizierungsregeln und - parameter (DFP) von einer Eingabevorrichtung (ET) in die Regelvorrichtung (ST) eingeladen und dort gespeichert werden oder in einem elektrisch ladbaren Programmspeicher, einem EPROM oder EEPROM, abgespeichert sind.

4. Selbstlenkvorrichtung nach einem der vorstehenden Ansprüche, dadurch gekennzeichnet, daß die periodisch von der Regelvorrichtung (ST) aufgenommenen Eingangssignale (OS, LRS, RWS) über mehrere der Perioden in der Regelvorrichtung (ST) zwischengespeichert werden und zusätzlich einen Beitrag zur Lenksteuergröße (LSG), ggf. durch die Fuzzyfizierung, erbringen.

5. Selbstlenkvorrichtung nach einem der vorstehenden Ansprüche, dadurch gekennzeichnet, daß die Eingangssignale (OS, LRS, RWS) jeweils in Eingangsgrößen umgewandeit und in der Regelvorrichtung (ST) nach ihrer Nullpunktlage und ihrer Bereichsgröße normiert werden, wozu jeweils Normierungsparameter (NP) der Regelvorrichtung (ST) über die Eingabevorrichtung (ET) zugeführt werden oder bei jeweils vorgegebenen Abweichungen vom Ortungskriterium und in ihrer Nullpunktlage durch eine Bedieneranweisung von der Regelvorrichtung (ST) übernommen werden.

6. Selbstlenkvorrichtung nach einem der vorstehenden Ansprüche, dadurch gekennzeichnet, daß die Transformation oder Defuzzyfizierung der Lenksteuergröße (LSG) in ein Linksstellsignal (SHL), das ein zugeordnetes Linkssteuerventil (LV) beaufschlagt, und ein Rechtsstellsignal (SHR), das ein Rechtssteuerventil (RV) beaufschlagt, erfolgt, von denen die Lenkhydraulik (LH) links- bzw. rechtslenkend beaufschlagt ist.

7. Selbstlenkvorrichtung nach Anspruch 6, dadurch gekennzeichnet, daß das Linksstellsignal (SHL) und das Rechtsstellsignal (SHR) in der Regelvorrichtung (ST) jeweils in einem Bereich nahe deren Nullpunkten einander in einem Überdeckungsbereich (UB) überschneidend normiert sind.

8. Selbstlenkvorrichtung nach Anspruch 6 oder 7, dadurch gekennzeichnet, daß in der Regelvorrichtung (ST) das Linksstellsignal (SHL) und das Rechtsstellsignal (SHR) dann, wenn das Ortungssignal (OS) einen Beitrag zur Lenksteuergröße (LSG) erbringt, auf vorgegebene Grenzwerte (GW1, GW2) normiert sind, die jeweils unterhalb von Stellsignalen für die jeweils maximal möglichen Lenkwinkel liegen.

9. Selbstlenkvorrichtung nach Anspruch 7 oder 8, dadurch gekennzeichnet, daß die Regelvorrichtung (ST) die Normierungsvorgaben über die Eingabevorrichtung (ET) erhält.

10. Selbstlenkvorrichtung nach einem der vorstehenden Ansprüche, dadurch gekennzeichnet, daß die Regelvorrichtung (ST) die Lenksteuergröße (LSG) bezüglich ihrer Amplituden und/oder Regelzeiten über eine Anzahl der Perioden statistisch auswertet und abhängig von einer so gewonnenen statistischen Größe die Normierungs- und/oder Fuzzyfizierungsparameter (NP, FP) schrittweise variiert und abhängig von einer Änderung der folgend ermittelten statistischen Größe zur jeweils vorhergehend ausgewerteten statistischen Größe die Normierungs- und/oder Fuzzyfizierungsparameter (NP FP) jeweils weiter derart schrittweise variiert, daß eine Verringerung der jeweils betrachteten statistischen Größe zu erwarten ist.

11. Selbstlenkvorrichtung nach Anspruch 10, dadurch gekennzeichnet, daß die statistische Größe die Amplitudenstreuung und/oder der Amplituden-Spitzenwert und/oder der Regelzeitkonstanten-Spitzenwert ist/sind.

12. Selbstlenkvorrichtung nach Anspruch 10 oder 11, dadurch gekennzeichnet, daß die periodischen Signalauswertungen mittels des Geschwindigkeitssignales (VS) auf einen Fahrwegabschnitt normiert erfolgen und die zu verringernde statistische Größe der Amplitudenspitzenwert relativ zum zugehörigen Fahrwegabschnitt ist.

13. Selbstlenkvorrichtung nach einem der vorstehenden Ansprüche, dadurch gekennzeichnet, daß von dem Lenkrad (R) rechts- und linksdrehendwirkende hydraulische Steuerverbindungen unmittelbar zu der Lenkhydraulik (LH) führen und die Links-Rechts-Steuerventile (LV, RV) jeweils wenn sie stromlos sind geschlossen sind und ihre Stromversorgung nur über eine Sicherheitsschaltung (SS) aktiviert ist.

14. Selbstlenkvorrichtung nach Anspruch 13, dadurch gekennzeichnet, daß die Sicherheitsschaltung (SS) aus einer UND-Schaltung des Handschalter-Ein-Signals (HS) und/oder des Fußschalter-Ein-Signales (FS) und/oder des Notschalter-Aus-Signales (NS) und/oder eines Regelvorrichtungsüberwachungssignales (SU) besteht.

15. Selbstlenkvorrichtung nach Anspruch 14, dadurch gekennzeichnet, daß das Regelvorrichtungsüberwachungssignal (SU) von einem Kontakt eines Sicherheitsrelais (SR) gebildet ist, das durch ein kapazitiv aus der Regelvorrichtung (ST) ausgekoppeltes, periodisch wechselnd ausgegebenes Signal (PS) gleichgerichtet und gefiltert, eine Ansprechschwelle des Sicherheitsrelais (SR) etwas überschreitend angesteuert ist.

16. Selbstlenkvorrichtung nach Anspruch 15, dadurch gekennzeichnet, daß das kapazitiv ausgekoppelte Signal (PS) über eine Gleichrichterbrücke (GB) auf das Sicherheitsrelais (SR) geführt ist, über dessen Schaltkontakt (SK) die Stromversorgung der Links-Rechtssteuerventile (LV RV) führt.

17. Selbstlenkvorrichtung nach einem der vorstehenden Ansprüche, dadurch gekennzeichnet, daß die Regelvorrichtung (ST) ein 8-bit-Mikroprozessor ist.

18. Selbstlenkvorrichtung nach einem der vorstehenden Ansprüche, dadurch gekennzeichnet, daß die Regelvorrichtung (ST) mit einem digitalen Nachrichtenbus (CAN) verbunden ist, der mit mindestens einem weiteren Prozessor (ZP) verbunden ist, der die Eingabevorrichtung (ET) umfaßt und deren Eingabedaten programmgesteuert aufbereitet als die Fuzzyfizierungsregeln (FR) und/oder - parameter (FP) sowie die Defuzzyfizierungsregeln (DFR) und/oder -parameter (DFP) und die Normierungsparameter (NP) und Normierungsvorgaben (NV) der Regelvorrichtung (ST) zuführt.

19. Selbstlenkvorrichtung nach Anspruch 18, dadurch gekennzeichnet. daß die Regelvorrichtung (ST) die jeweiligen Fuzzyfizierungsparameter (FP) und Defuzzyfizierungsparameter (DFP) sowie die Normierungsparameter (NP) und Normierungsvorgaben (NV) sowie ggf. die gewonnenen statistischen Größen an den weiteren Prozessor (ZP) ausgibt, der diese programmgesteuert aufbereitet auf einer Anzeigevorrichtung (DV) ausgibt.

20. Selbstlenkvorrichtung nach einem der vorstehenden Ansprüche, dadurch gekennzeichnet, daß an der Landmaschine (1), insbes. einem Mahdrescher, drei Teilortungsvorrichtungen (OV1 - OV3) angeordnet sind, von denen eine erste auf das Stoppelfeld, eine zweite auf das Gelreide und eine dritte auf die Erntegutkante (GK) gerichtet ist und jeweils die Differenz der Ortungssignale der ersten und zwieiten Teilortungsvorrichtungen (OV1, OV2) die Bereichsgröße und der Mittelwert der beiden genannten Ortungssignale die Nullpunktlage für das Ortungssignal der dritten Teilortungsvorrichtung (OV3) ergibt.

21. Selbstlenkvorrichtung nach einem der vorstehenden Ansprüche, dadurch gekennzeichnet, daß die Teilortungsvorrichtungen aus drei Abschnitten einer, vorzugsweise optischen, Sensorzeile bestehen, die Signale aus verschiedenen Raumwinkeln erfassen.

22. Selbstlenkvorriehtung nach einem der vorstehenden Ansprüche, dadurch gekennzeichnet, daß die Ortungsvorrichtung (OV; OV1 - OV3) der Landmaschine (1) um einen solchen Vorausabstand (VA) vorauseilend die Erntegutkante (GK) abtastet, so daß die Ortungssignalabweichung von einem als Ortungskriterium vorgegebenen Vergleichswert teils einen Erntegutkanten-Seitenversatz (GKS) und teils einen jeweils bestehenden Fahrtrichtungswinkel zur Erntegutkante (GK) repräsentiert.

23. Selbstlenkvorrichtung nach Anspruch 22, dadurch gekennzeichnet, daß die Ortungssignalabweichung von dem vorgegebenen Vergleichswert und das Radstellwinkelsignal (RWS) jeweils adressierend den zweidimensionalen Kenndatenfeld zugeführt sind, das die Lenksteuergrößen (LSG) dadurch ausgibt.

24. Selbstlenkvorrichtung nach einem der vorstehenden Ansprüche, dadurch gekennzeichnet, daß die Ortungsvorrichtung (OV; OV1 - OV3) mindestens einen Infrarotsensor, eine Ultraschallsender-Empfangeranordnung, einen Laserentfernungsmesser oder mechanische Reihenabtaster enthält.

## Claims

1. A self-steering arrangement having at least one locating apparatus (OV) whose locating signal or signals (OS) is or are fed to a regulating device (ST) which outputs at least one hydraulic steering control signal (SHL, SHR) to an electrically controlled hydraulic steering system (LH), in such a way that a respective locating signal deviation from a predetermined locating criterion is minimised, characterised in that the regulating device (ST) periodically digitises the locating signal (OS) and by way of a digital-functional association of the locating signal deviation from the locating criterion produces the hydraulic steering control signal (SHL, SHR) approximately proportionally in a range close to zero and from there respectively increasingly progressively and outputs same to the hydraulic steering system (LH) and further input signals are fed to the regulating device and those input signals, combined together in group-wise or directly, are fed in periodically addressing mode to a preferably two-dimensional characteristic data field whose characteristic data the regulating device outputs directly or transformed as the hydraulic steering control signals (SHL, SHR) and that the regulating device (ST) transforms the periodic locating signal (OS) by means of fuzzyfication rules in accordance with fuzzyfication parameters (FP) into a steering control value (LSG) and transforms same according to defuzzyfication rules in accordance with defuzzyfication parameters (DFP) into the hydraulic control steering signal or signals (SHL SHR).

2. A self-steering arrangement according to claim 1 characterised in that if at least one of the switch signals (HS, NS, FS) signals an OFF-position or emergency position, only the steering wheel position signal (LRS) and not the locating signal (OS) makes a contribution to the steering control value (LSG).

3. A self-steering arrangement according to claim 1 or claim 2 characterised in that the fuzzyfication rules and parameters (FP) and/or the defuzzyfication rules and parameters (DFP) are loaded by an input device (ET) into the regulating device (ST) and are stored there or are stored in an electrically loadable program storage means, an EPROM or EEPROM.

4. A self-steering arrangement according to one of the preceding claims characterised in that the input signals (OS, LRS, RWS) received by the regulating device (ST) are put into intermediate storage over a plurality of the periods in the regulating device (ST) and additionally make a contribution to the steering control value (LSG), possibly by fuzzyfication.

5. A self-steering arrangement according to one of the preceding claims characterised in that the input signals (OS, LRS, RWS) are respectively converted into input values and standardised in the regulating device (ST) in accordance with the zero point position thereof and the range size thereof, for which purpose standardisation parameters (NP) are respectively fed to the regulating device (ST) by way of the input device (ET) or in the event of respectively predetermined deviations from the locating criterion and in respect of the zero point position thereof are taken over by the regulating device (ST) by an operator instruction.

6. A self-steering arrangement according to one of the preceding claims characterised in that transformation or defuzzyfication of the steering control value (LSG) is effected into a left-lock signal (SHL) which operates an associated left-lock control valve (LV) and a right-lock signal (SHR) which operates a right-lock control valve (RV), by which the hydraulic steering system (LH) is operated to steer left or right respectively.

7. A self-steering arrangement according to claim 6 characterised in that the left-lock signal (SHL) and the right-lock signal (SHR) are respectively standardised in the regulating device (ST) in a range near the zero points thereof in overlapping relationship in an overlap range (UB).

8. A self-steering arrangement according to claim 6 or claim 7 characterised in that in the regulating device (ST) the left-lock signal (SHL) and the right-lock signal (SHR), when the locating signal (OS) makes a contribution to the steering control value (LSG), are standardised to predetermined limit values (GW1, GW2) which are respectively below control signals for the respective maximum possible lock angles.

9. A self-steering arrangement according to claim 7 or claim 8 characterised in that the regulating device (ST) receives the standardisation values by way of the input device (ET).

10. A self-steering arrangement according to one of the preceding claims characterised in that the regulating device (ST) statistically evaluates the steering control value (LSG) in respect of the amplitude and/or regulating times thereof over a number of periods and in dependence on a statistical value obtained in that way varies stepwise the standardisation and/or fuzzyfication parameters (NP, FP) and in dependence on a change in the subsequently ascertained statistical value in relation to the respective precedingly evaluated statistical value respectively further varies stepwise the standardisation and/or fuzzyfication parameters (NP, FP) in such a way that a reduction in the statistical value which is respectively being considered is to be expected.

11. A self-steering arrangement according to claim 10 characterised in that the statistical value is/are the amplitude scatter and/or the amplitude peak value and/or the regulating time constant peak value.

12. A self-steering arrangement according to claim 10 or claim 11 characterised in that the periodic signal evaluation operations are effected by means of the speed signal (VS) standardised to a travel distance portion and the statistical value to be reduced is the amplitude peak value relative to the associated travel distance portion.

13. A self-steering arrangement according to one of the preceding claims characterised in that hydraulic control connections which provide for applying right lock and left lock lead from the steering wheel (R) directly to the hydraulic steering system (LH) and the left-lock and right-lock control valves (LV, RV) are respectively closed when they are current-less and the current supply thereof is activated only by way of a safety circuit (SS).

14. A self-steering arrangement according to claim 13 characterised in that the safety circuit (SS) comprises an AND-circuit of the hand switch on-signal (HS) and/or the foot switch on-signal (FS) and/or the emergency switch off-signal (NS) and/or a regulating device monitoring signal (SU).

15. A self-steering arrangement according to claim 14 characterised in that the regulating device monitoring signal (SU) is formed by a contact of a safety relay (SR) which, rectified and filtered by a periodically alternately outputted signal (PS) capacitively coupled out of the regulating device (ST), is actuated somewhat exceeding a response threshold of the safety relay (SR).

16. A self-steering arrangement according to claim 15 characterised in that the capacitively coupled-out signal (PS) is passed by way of a rectifier bridge (GB) to the safety relay (SR), the current supply for the left-lock and right-lock control valves (LV. RV) passing by way of the switching contact (SK) of the safety relay.

17. A self-steering arrangement according to one of the preceding claims characterised in that the regulating device (ST) is an 8-bit microprocessor.

18. A self-steering arrangement according to one of the preceding claims characterised in that the regulating device (ST) is connected to a digital communication bus (CAN) which is connected to at least one further processor (ZP) which includes the input device (ET) and which feeds the input data thereof prepared under program control as the fuzzyfication rules (FR) and/or parameters (FP) and the defuzzyfication rules (DFR) and/or parameters (DFP) and the standardisation parameters (NP) and standardisation values (NV) to the regulating device (ST).

19. A self-steering arrangement according to claim 18 characterised in that the regulating device (ST) outputs the respective fuzzyfication parameters (FP) and defuzzyfication parameters (DFP) and the standardisation parameters (NP) and standardisation values (NV) and possibly the statistical values obtained to the further processor (ZP) which outputs same prepared under program control to a display device (DV).

20. A self-steering arrangement according to one of the preceding claims characterised in that three partial locating devices (OV1-OV3) are arranged on the agricultural machine (1), in particular a combine harvester, of which a first is directed on to the stubble field, a second is directed on to the harvest and a third is directed on to the crop material edge (GK) and in each case the difference of the locating signals of the first and second partial locating devices (OV1, OV2) gives the range magnitude and the mean value of the two said partial locating signals gives the zero point position for the partial locating signal of the third partial locating device (OV3).

21. A self-steering arrangement according to one of the preceding claims characterised in that the partial locating devices comprise three portions of a. preferably optical, sensor line which detect signals from various solid angles.

22. A self-steering arrangement according to one of the preceding claims characterised in that the locating device (OV; OV1 - OV3) of the agricultural machine (1) senses the crop material edge (GK) in leading relationship by such a lead distance (VA) that the locating signal deviation from a comparative value which is predetermined as a locating criterion in part represents a crop material edge side displacement (GKS) and in part a respectively applicable angle of direction of travel with respect to the crop material edge (GK).

23. A self-steering arrangement according to claim 22 characterised in that the locating signal deviation from the predetermined comparative value and the wheel position angle signal (RWS) are respectively fed in addressing mode to the two-dimensional characteristic data field which thereby outputs the steering control values (LSG).

24. A self-steering arrangement according to one of the preceding claims characterised in that the locating device (OV: OV1 - OV3) includes at least one infra-red sensor, ultrasonic transmitter-receiver arrangement. laser range measuring device or mechanical row sensing devices.

## Revendications

1. Dispositif d'autoguidage comprenant au moins un dispositif de localisation (OV) dont le signal/les signaux de localisation (OS) est/sont transmis à un dispositif de régulation (ST) qui délivre au moins un signal de réglage d'hydraulique de braquage (SHL, SHD) à une hydraulique de braquage (LH) à commande électrique, de manière à minimiser un écart du signal de localisation par rapport à un critère de localisation prédéfini, caractérisé par le fait que le dispositif de régulation (ST) numérise périodiquement le signal de localisation (OS) et, par une mise en relation numérique de l'écart de signal de localisation avec le critère de localisation, génère le signal de réglage d'hydraulique de braquage (SHL, SHR), sensiblement proportionnel dans une plage au voisinage de zéro et de plus en plus progressif à partir de là, et transmet ledit signal à l'hydraulique de braquage (LH), par le fait que le dispositif de régulation reçoit des signaux d'entrée supplémentaires et que ces signaux d'entrée sont transmis directement ou de manière groupée avec adressage périodique à une zone de données, de préférence bidimensionnelle, dont les données sont délivrées par le dispositif de régulation, directement ou après transformation, en tant que signaux de réglage d'hydraulique de braquage (SHL, SHR) et par le fait que le dispositif de régulation (ST) transforme le signal de localisation (OS) périodique en une grandeur de commande de braquage (LSG) à l'aide de règles de "fuzzification", conformément à des paramètres de "fuzzification" (FP), et transforme celle-ci en signal/signaux de réglage d'hydraulique de braquage (SHL, SHR) à l'aide de règles de "défuzzification", conformément à des paramètres de "défuzzification" (DFP).

2. Dispositif d'autoguidage selon la revendication 1, caractérisé par le fait que lorsqu'au moins l'un des signaux de commutateur (HS, NS, FS) signale un état "Arrêt" ou un état "urgence", seul le signal de position de volant (LRS) et pas le signal de localisation (OS) intervient dans la détermination de la grandeur de commande de braquage (LSG).

3. Dispositif d'autoguidage selon la revendication 1 ou 2, caractérisé par le fait que les règles et les paramètres de "fuzzification" (FP) et/ou les règles et les paramètres de "défuzzification" (DFP) sont chargés dans le dispositif de régulation (ST) par un dispositif d'entrée (ET) et sont mémorisés dans ledit le dispositif de régulation, ou bien sont mémorisés dans une mémoire de programme chargée électriquement, dans une mémoire EPROM ou une mémoire EEPROM.

4. Dispositif d'autoguidage selon une des revendications précédentes, caractérisé par le fait que les signaux d'entrée (OS, LRS, RWS) enregistrés périodiquement par le dispositif de régulation (ST) sont mémorisés temporairement, sur plusieurs périodes, dans le dispositif de régulation (ST) et interviennent en plus dans la détermination de la grandeur de commande de braquage (LSG), le cas échéant à travers la "fuzzification".

5. Dispositif d'autoguidage selon une des revendications précédentes, caractérisé par le fait que les signaux d'entrée (OS, LRS, RWS) sont convertis chaque fois en grandeurs d'entrée et normalisés dans le dispositif de régulation (ST) en fonction de la position du zéro et de leur étendue de zone, des paramètres de normalisation (NP) étant introduits dans le dispositif de régulation (ST) par l'intermédiaire du dispositif d'entrée (ET) ou étant adoptés par le dispositif de régulation (ST) à la suite d'une instruction d'utilisateur dans le cas d'écarts prédéfinis par rapport au critère de localisation et à la position du zéro.

6. Dispositif d'autoguidage selon une des revendications précédentes, caractérisé par la transformation ou la "défuzzification" de la grandeur de commande de braquage (LSG) en un signal de réglage à gauche (SHL) qui attaque une valve de commande gauche (LV) associée et en un signal de réglage à droite (SHR) qui attaque une valve de commande droite (LR) associée, par lesquelles l'hydraulique de braquage (LH) est sollicitée dans le sens d'un braquage vers la gauche ou vers la droite.

7. Dispositif d'autoguidage selon la revendication 6, caractérisé par le fait que le signal de réglage à gauche (SHL) et le signal de réglage à droite (SHR) sont normalisés dans le dispositif de régulation (ST), dans une zone proche de leur zéro, de manière à se chevaucher dans une zone de chevauchement (UB).

8. Dispositif d'autoguidage selon la revendication 6 ou 7, caractérisé par le fait que le signal de réglage à gauche (SHL) et le signal de réglage à droite (SHR), lorsque le signal de localisation (OS) intervient dans la détermination de la grandeur de commande de braquage (LSG) sont normalisés dans le dispositif de régulation (ST), sur des valeurs seuils prédéfinies (GW1, GW2) qui sont situées chaque fois en deçà de signaux de réglage pour les angles de braquage maximaux possibles.

9. Dispositif d'autoguidage selon la revendication 7 ou 8, caractérisé par le fait que le dispositif de régulation (ST) reçoit les instructions de normalisation à travers le dispositif d'entrée (ET).

10. Dispositif d'autoguidage selon une des revendications précédentes, caractérisé par le fait que le dispositif de régulation (ST) exploite statistiquement la grandeur de commande braquage (LSG) du point de vue de ses amplitudes et/ou de ses temps de réglage sur un certain nombre de périodes et, en fonction d'une grandeur statistique ainsi obtenue, fait varier pas à pas les paramètres de normalisation et/ou de "fuzzification" (NP, FP) et en fonction d'une variation de la grandeur statistique nouvellement déterminée par rapport à la grandeur statistique déterminée précédemment fait varier pas à pas les paramètres de normalisation et de "fuzzification" (NP, FP) de manière obtenir une diminution de la grandeur statistique considérée.

11. Dispositif d'autoguidage selon la revendication 10, caractérisé par le fait que la grandeur statistique est la dispersion d'amplitude et/ou le pic d'amplitude et/ou le pic de constante de temps de réglage.

12. Dispositif d'autoguidage selon la revendication 10 ou 11, caractérisé par le fait que l'exploitation périodique du signal est réalisée de manière normalisée sur un tronçon de parcours à l'aide du signal de vitesse (VS) et que la grandeur statistique à diminuer est le pic d'amplitude par rapport au tronçon de parcours considéré.

13. Dispositif d'autoguidage selon une des revendications précédentes, caractérisé par le fait que des lignes de commande hydrauliques partant du volant (R) pour le braquage à droite et le braquage à gauche mènent directement à l'hydraulique de braquage (LH) et que les valves de commande gauche et droite (LV, LR) sont fermées en l'absence de courant et que leur alimentation en courant est activée exclusivement par l'intermédiaire d'une commutation de sécurité (SS).

14. Dispositif d'autoguidage selon la revendication 13, caractérisé par le fait que la commutation de sécurité (SS) est formée d'une commutation "ET" du signal "Marche" (HS) du commutateur manuel et/ou du signal "Marche" (FS) du commutateur à pied et/ou du signal "Arrêt" (NS) du commutateur d'urgence et/ou d'un signal de surveillance (SU) du dispositif de régulation.

15. Dispositif d'autoguidage selon la revendication 14, caractérisé par le fait que le signal de surveillance (SU) du dispositif de régulation est formé par un contact d'un relais de sécurité (SR), qui est déclenché par un signal (PS) découplé par voie capacitive du dispositif de régulation (ST) , émis avec alternance périodique, redressé et filtré avec un faible dépassement du seuil de réponse du relais de sécurité (SR).

16. Dispositif d'autoguidage selon la revendication 15, caractérisé par le fait que le signal (PS) découplé par voie capacitive est transmis via un pont redresseur (GB) au relais de sécurité (SR), dont le contact de commutation (SK) assure l'alimentation en courant électrique des valves gauche et droite (LV, RV).

17. Dispositif d'autoguidage selon une des revendications précédentes, caractérisé par le fait que le dispositif de régulation (ST) est un microprocesseur 8 bits.

18. Dispositif d'autoguidage selon une des revendications précédentes, caractérisé par le fait que le dispositif de régulation (ST) est relié à un bus de données numérique (CAN) connecté à au moins un processeur supplémentaire (ZP), qui englobe le dispositif d'entrée (ET), dont les données d'entrée sont traitées par programme en tant que règles (FR) et/ou paramètres de "fuzzification" (FP), ainsi qu'en tant que règles (DFR)) et/ou paramètres de "défuzzification" (DFP) et qui délivre les paramètres de normalisation (NP) et les règles de normalisation (NV) au dispositif de régulation (ST).

19. Dispositif d'autoguidage selon la revendication 18, caractérisé par le fait que le dispositif de régulation (ST) délivre au processeur supplémentaire (ZP) les paramètres concernés de "fuzzification" (FP) et de "défuzzification" (DFP), ainsi que les paramètres de normalisation (NP) et les règles de normalisation (NV) ainsi que le cas échéant les grandeurs statistiques obtenues, lequel processeur traite ces éléments par programme et les édite sur une dispositif d'affichage (DV).

20. Dispositif d'autoguidage selon une des revendications précédentes, caractérisé par le fait que sur la machine agricole (1), en particulier sur une moissonneuse-batteuse, sont montés trois dispositifs de localisation élémentaires (OV1-OV3) qui sont dirigés l'un sur le champ de chaumes, le deuxième sur les céréales et le troisième sur le bord de produit récolté (GK) et que chaque fois la différence des signaux de localisation des premier et deuxième dispositifs de localisation élémentaires (OV1, OV2) donne l'étendue de zone et la valeur moyenne des deux signaux de localisation mentionnés donne la position du zéro pour le signal de localisation du troisième dispositif de localisation élémentaire (OV3).

21. Dispositif d'autoguidage selon une des revendications précédentes, caractérisé par le fait que les dispositifs de localisation élémentaires sont formés par trois segments d'une rangée de capteurs, de préférence optiques, qui déterminent des signaux sous différents angles solides.

22. Dispositif d'autoguidage selon une des revendications précédentes, caractérisé par le fait que les dispositifs de localisation (OV; OV1-OV3) de la machine agricole (1) palpent le bord de produit récolté (GK) avec une avance telle, que l'écart de signal de localisation par rapport à une valeur de référence, prédéfinie en tant que critère de localisation, représente pour partie un décalage latéral (GKS) par rapport au bord de produit récolté et pour partie un angle entre la direction de déplacement et le bord de produit récolté (GK).

23. Dispositif d'autoguidage selon la revendication 22, caractérisé par le fait que l'écart de signal de localisation par rapport à la valeur de référence prédéfinie et le signal de réglage d'angle de roue (RWS) sont transmis avec adressage à la zone de données bidimensionnelle qui délivre ainsi les grandeurs de commande de braquage (LSG).

24. Dispositif d'autoguidage selon une des revendications précédentes, caractérisé par le fait que le dispositif de localisation (OV; OV1-OV3) comprend au moins un détecteur à infrarouge, un système émetteur-récepteur à ultrasons, un télémètre à laser ou un palpeur de rang mécanique.
